# EUROPÄISCHE PATENTANMELDUNG

(11) **EP 2 163 414 A1**
(43) Veröffentlichungstag der Anmeldung: **17.03.2010**
(21) Anmeldenummer: 09010073.6
(22) Anmeldetag: 04.08.2009
(51) Int. Cl.: B60H 1/00, B66C 13/54

(54) **Verfahrbares Arbeitsgerät, insbesondere Mobilkran**

(30) Priorität: 16.09.2008 DE 202008012270 U
(71) Anmelder: Liebherr-Werk Ehingen GmbH, 89584 Ehingen/Donau (DE)
(72) Erfinder: Rafailovic, Mikica, 89584 Ehingen/ Donau (DE)
(74) Vertreter: Laufhütte, Dieter

(57) **Zusammenfassung**

Die Erfindung betrifft ein verfahrbares Arbeitsgerät, insbesondere einen Mobilkran, mit einem Unterwagen und einem auf dem Unterwagen drehbar angeordneten Oberwagen, und mit einer Klimaanlage, welche einen Kältemittelkreislauf mit einer Kälteeinheit und einer Klimaeinheit aufweist. Erfindungsgemäß verläuft ein Teil des Kältemittelkreislaufs im Unterwagen und ein Teil des Kältemittelkreislaufs im Oberwagen, wobei diese Teile über Kältemittelleitungen in einer Drehdurchführung zwischen dem Unterwagen und dem Oberwagen verbunden sind.

## Beschreibung

Die vorliegende Erfindung betrifft ein verfahrbares Arbeitsgerät, insbesondere Mobilkran, mit einem Unterwagen und einem auf dem Unterwagen drehbar angeordneten Oberwagen, und mit einer Klimaanlage, welche einen Kältemittelkreislauf mit einer Kälteeinheit und einer Klimaeinheit aufweist.

Bei solchen verfahrbaren Arbeitsgeräten sind üblicherweise am Unterwagen das Fahrwerk und am Oberwagen eine Kabine, von welcher aus das verfahrbare Arbeitsgerät bedient werden kann, angeordnet. Die Klimaanlage dient dabei zur Klimatisierung dieser Kabine, wofür die Kälteeinheit der Klimaanlage Kältemittel abkühlt, welches dann über Kältemittelleitungen zur Klimaeinheit fließt, wo die Luft der Kabine abgekühlt wird. Das erwärmte Kältemittel fließt dann zurück zur Kälteeinheit, wo es wieder abgekühlt wird.

Die Kälteeinheit umfaßt dabei üblicherweise einen Kompressor und einen Kondensator, die Klimaeinheit ein Expansionsventil und ein Verdampfer. Kälteeinheit und Klimaeinheit umfassen weiterhin üblicherweise Lüfter bzw. Gebläse, über welche ein Luftstrom erzeugt wird, welcher den Kondensator beziehungsweise den Verdampfer durchströmt.

Bei verfahrbaren Arbeitsgeräten, insbesondere bei Mobilkran, ist dabei oft nur am Unterwagen ein Verbrennungsmotor zum Antrieb des Arbeitsgerätes bzw. seiner Komponenten vorgesehen. Der oder die Verbrennungsmotoren treiben dabei sowohl das Fahrwerk als auch Hydraulikpumpen zur Versorgung aller Aktoren mit Hydrauliköl an. Dabei wird vom Unterwagen mittels hydraulischer Pumpen Hydrauliköl mit entsprechendem Druck zum Oberwagen durch eine Drehdurchführung zwischen Unterwagen und Oberwagen geführt.

Der Kompressor der Klimaanlage wird dann bei bekannten Arbeitsgeräten über einen Hydraulikmotor angetrieben, welcher entweder über einen eigenen Hydraulikkreislauf oder einen anderen Hydraulikkreislauf, welcher im Arbeitsbetrieb wenig genutzt wird (zum Beispiel beim Kranbetrieb die Televerbolzung) mit Hydraulikfluid versorgt wird. Hierdurch entstehen Energieverluste, welche wiederum zu einem erhöhten Kraftstoffverbrauch führen. Die Verluste entstehen dabei aufgrund des hydraulischen Wirkungsgrades beim Antrieb des Kompressors über die Hydraulikpumpe und den Hydraulikmotor. Zudem können sich bei bekannten Arbeitsgeräten Probleme bei der Anordnung der einzelnen Komponenten der Klimaanlage ergeben.

Aufgabe der vorliegenden Erfindung ist es daher, ein verfahrbares Arbeitsgerät zur Verfügung zu stellen, bei welchem die Klimaanlage energiesparender betrieben werden kann. Weiterhin ist es Aufgabe der Erfindung, eine flexiblere Anordnung der Klimaanlage zu ermöglichen.

Erfindungsgemäß wird diese Aufgabe dadurch gelöst, dass ein Teil des Kältemittelkreislaufs im Unterwagen und ein Teil des Kältemittelkreislaufs im Oberwagen verläuft, wobei diese Teile über Kältemittelleitungen in einer Drehdurchführung zwischen dem Unterwagen und dem Oberwagen verbunden sind. Hierdurch könnten die einzelnen Komponenten der Klimaanlage, insbesondere Kälteeinheit und Klimaeinheit, getrennt voneinander im Unterwagen beziehungsweise im Oberwagen angeordnet werden, wobei der Kältemittelkreislauf durch die Drehdurchführung hindurch geführt wird. So muß der Kompressor der Kälteeinheit nicht mehr aufwendig über einen Hydraulikkreislauf angetrieben werden. Zudem können Kälteeinheit und Klimaeinheit variabel plaziert werden, so dass sich Vorteile bezüglich der Anordnung im verfahrbaren Arbeitsgerät ergeben. Erfindungsgemäß ist so eine äußerst kompakte und energiesparende Konstruktionen möglich.

Die Kälteeinheit dient dabei zur Abkühlung des Kältemittels und umfaßt üblicherweise einen Kompressor und einen Kondensator, über welche das Kältemittel komprimiert und abgekühlt wird. Zudem ist üblicherweise ein Lüfter vorgesehen, über welchen Luft durch den Kondensator geführt wird, um Wärme abzuführen. Weiterhin kann die Kälteeinheit einen Filtertrockner umfassen. Die Klimaeinheit dient dagegen zur Abkühlung der zu klimatisierenden Luft und umfaßt üblicherweise ein Expansionsventil und einen Verdampfer, über welchen das Kältemittel expandiert wird und Wärme aufnimmt. Dabei ist üblicherweise ein Gebläse vorgesehen, um die abzukühlende Luft durch den Verdampfer zu führen. Weiterhin kann die Klimaanlage eine Temperaturregelung umfassen.

Vorteilhafterweise ist dabei die Kälteeinheit im Unterwagen und die Klimaeinheit im Oberwagen angeordnet. So kann die Kälteeinheit über im Unterwagen vorhandenen Antriebsmittel angetrieben werden, während die Klimaeinheit eine am Oberwagen angeordnete Kabine klimatisieren kann. Die Kältemittelleitungen, über welche der Kältemittelkreislauf zwischen Kälteeinheit und Klimaeinheit hergestellt wird, werden dabei durch die Drehdurchführung zwischen Unterwagen und Oberwagen geführt, was die erfindungsgemäße verteilte Anordnung von Kälteeinheit und Klimaeinheit auf Unterwagen und Oberwagen ermöglicht.

Bei den erfindungsgemäßen verfahrbaren Arbeitsgeräten ist dabei üblicherweise am Unterwagen ein Verbrennungsmotor angeordnet, über welchen das Fahrwerk und/ oder Arbeitskomponenten des Arbeitsgerätes angetrieben werden. Insbesondere kann der Verbrennungsmotor dabei als Fahrantrieb und/oder zum Antrieb von Hydraulikpumpen eingesetzt werden. Am Oberwagen ist dagegen üblicherweise eine Kabine angeordnet, über welche das verfahrbare Arbeitsgerät bedient werden kann. Erfindungsgemäß kann nun die Kälteeinheit von dem Verbrennungsmotor angetrieben werden, während die Klimaeinheit zur Klimatisierung der Kabine eingesetzt wird.

Vorteilhafterweise wird der Kompressor der Kälteeinheit direkt von einem Verbrennungsmotor angetrieben, insbesondere vom Fahrmotor des verfahrbaren Arbeitsgerätes und/ oder von einem Antriebsmotor der Hydraulikpumpen des verfahrbaren Arbeitsgerätes. Durch diesen direkten Antrieb können Verluste durch einen zwischengeschalteten Hydraulikkreislauf vermieden werden.

Vorteilhafterweise ist dabei der Kompressor der Kälteeinheit am Verbrennungsmotor angebaut. So ergibt sich eine besonders kompakte und kostengünstige Anordnung.

Weiterhin vorteilhafterweise wird die erfindungsgemäße Klimaanlage bei verfahrbaren Arbeitsgeräten eingesetzt, bei welchen der Oberwagen keinen Verbrennungsmotor aufweist. Hier ist der Einsatz der erfindungsgemäßen Klimaanlage besonders vorteilhaft.

Weiterhin vorteilhafterweise ist der Kondensator der Kälteeinheit an einem Kühler angebaut, welcher zur Kühlung eines Verbrennungsmotors und/ oder zur Kühlung von Hydraulikfluid eingesetzt wird. Hierdurch ergibt sich wiederum eine äußerst kompakte und energiesparende Anordnung, da ein ohnehin vorhandener Kühler beziehungsweise ein ohnehin vorhandener Lüfter verwendet werden kann, um auch den Kondensator der Kälteeinheit zu kühlen.

Vorteilhafterweise wird dabei die erfindungsgemäße Klimaanlage bei solchen verfahrbaren Arbeitsgeräten eingesetzt, bei welchen am Oberwagen hydraulisch betriebene Komponenten angeordnet sind. Insbesondere kann dabei ein Ausleger vorgesehen sein, welcher am Oberwagen um eine horizontale Achse angelenkt und über mindestens einen Hydraulikzylinder bewegbar bzw. aufwippbar ist. Zur Versorgung dieser hydraulischen Aktoren mit Hydraulikfluid umfaßt die Drehdurchführung dabei vorteilhafterweise Hydraulikleitungen zur Durchführung von Hydraulikfluid vom Unterwagen zum Oberwagen.

Solche Drehdurchführungen für Hydraulikleitungen sind dabei bereits seit langem Stand der Technik. Erfindungsgemäß umfassen diese Drehdurchführungen nun neben den Hydraulikleitungen weiterhin Kältemittelleitungen, so dass die erfindungsgemäße getrennte Anordnung von Klimaeinheit und Kälteeinheit ermöglicht wird.

Die vorliegende Erfindung kann dabei bei verfahrbaren Arbeitsgeräten eingesetzt werden, welche eine kombinierte Fahrer- und Bedienkabine aufweisen, welche am Oberwagen angeordnet ist und über die Klimaeinheit klimatisiert wird. Eine solche kombinierte Fahrer- und Bedienkabine wird dabei insbesondere bei Mobilkranen eingesetzt, um den Mobilkran sowohl auf der Straße zu verfahren als auch am Hubort im Kranbetrieb zu bedienen. Die Fahrer- und Bedienkabine ist dabei am Oberwagen angeordnet und kann nun über die erfindungsgemäße Klimaeinheit klimatisiert werden. Zum Beispiel kann die kombinierte Fahrer- und Bedienkabine dabei über einen Schwenkarm am Oberwagen angelenkt sein.

Ebenso kann die vorliegende Erfindung jedoch auch bei verfahrbaren Arbeitsgeräten eingesetzt werden, welche eine Fahrerkabine am Unterwagen und eine Bedienerkabine am Oberwagen aufweisen. Erfindungsgemäß sind dann zu Kühlung der Fahrerkabine und der Bedienerkabine getrennte Klimaeinheiten vorgesehen, welche von derselben Kälteeinheit mit Kältemittel versorgt werden. Die Klimaeinheit zur Klimatisierung der Bedienerkabine wird dann erfindungsgemäß über die durch die Drehdurchführung geführten Kältemittelleitungen mit Kältemittel versorgt, während die Klimaeinheit zur Kühlung der Fahrerkabine über Kältemittelleitungen im Unterwagen mit der Kälteeinheit verbunden werden kann.

Vorteilhafterweise ist dabei mindestens ein Ventil zur Steuerung der Kältemittelversorgung der Klimaeinheiten für die Fahrerkabine und die Bedienerkabine vorgesehen. Über dieses Ventil beziehungsweise eine entsprechende Ventilanordnung können so die Kältemittelströme entsprechend gelenkt werden.

Die vorliegende Erfindung umfaßt weiterhin eine Klimaanlage für ein verfahrbares Arbeitsgerät, wie es oben beschrieben wurde. Dabei handelt es sich um eine Klimaanlage für ein verfahrbares Arbeitsgerät, insbesondere einen Mobilkran mit einem Unterwagen und einem auf dem Unterwagen drehbar angeordneten Oberwagen, wobei die Klimaanlage einen Kältemittelkreislauf mit einer Kälteeinheit und einer Klimaeinheit aufweist. Erfindungsgemäß ist dabei vorgesehen, daß ein Teil des Kältemittelkreislaufs im Unterwagen und ein Teil des Kältemittelkreislaufs im Oberwagen verläuft, wobei diese Teile über Kältemittelleitungen in einer Drehdurchführung zwischen dem Unterwagen und dem Oberwagen verbunden sind. Offensichtlich ergeben sich durch eine solche Klimaanlage die gleichen Vorteile, wie sie oben bezüglich des verfahrbaren Arbeitsgerätes beschreiben wurden.

Weiterhin umfaßt die vorliegende Erfindung eine Drehdurchführung für ein verfahrbares Arbeitsgerät, wie es oben beschrieben wurde. Diese Drehdurchführung zwischen Unterwagen und Oberwagen umfaßt dabei erfindungsgemäß Kältemittelleitungen, über welche Kältemittel vom Unterwagen zum Oberwagen und zurück fließen kann. Weiterhin umfaßt eine solche Drehdurchführung dabei vorteilhafterweise Hydraulikleitungen zur Durchführung von Hydraulikfluid.

Bei einer Führung des Kältemittels in einer Drehdurchführung ist es von Vorteil, die Kanäle für den Kältekreislauf entsprechend kurz zu halten, um die Wärmeverluste an die Umgebung zu minimieren. Alternativ können die Wärmeverluste auch durch eine geeignete Isolation minimiert werden.

Schließlich kann es besonders vorteilhaft sein, eine separate Durchführung für den Kältekreislauf vorzusehen.

Die vorliegende Erfindung wird nun anhand von Zeichnungen und Ausführungsbeispielen näher dargestellt.

### Dabei zeigen:

- Fig. 1: ein erstes Ausführungsbeispiel eines erfindungsgemäßen verfahrbaren Arbeitsgerätes mit einem ersten Ausführungsbeispiel einer erfindungsgemäßen Klimaanlage,
- Fig. 2: eine Ansicht des ersten Ausführungsbeispiel einer erfindungsgemäßen Klimaanlage, welches im ersten Ausführungsbeispiel des verfahrbaren Arbeitsgerätes zum Einsatz kommt,
- Fig. 3: ein zweites Ausführungsbeispiel einer erfindungsgemäßen Klimaanlage,
- Fig. 4: ein zweites Ausführungsbeispiel eines verfahrbaren Arbeitsgerätes mit einem dritten Ausführungsbeispiel einer erfindungsgemäßen Klimaanlage, und
- Fig. 5: eine Ansicht des dritten Ausführungsbeispiel einer erfindungsgemäßen Klimaanlage, welches beim zweiten Ausführungsbeispiel des verfahrbaren Arbeitsgerätes zum Einsatz kommt.

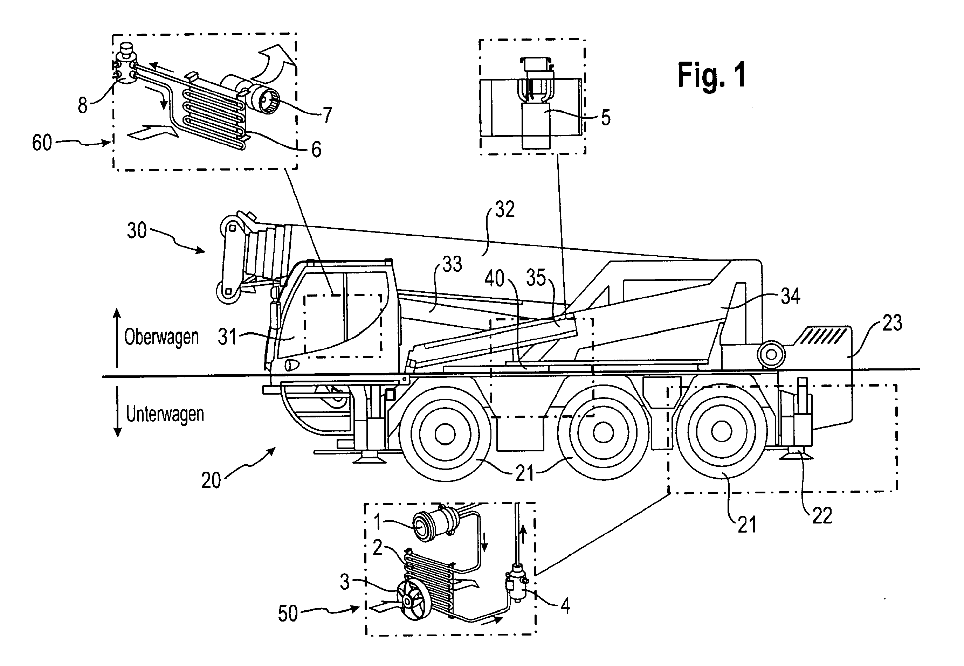

Figur 1 zeigt nun ein erstes Ausführungsbeispiel eines verfahrbaren Arbeitsgerätes. Dabei handelt es sich um einen Mobilkran mit einem Unterwagen 20 und einem Oberwagen 30, welcher auf dem Unterwagen um eine vertikale Drehachse drehbar angeordnet ist. Die drehbare Verbindung erfolgt dabei über einen Drehkranz 40, welcher ein beliebiges Verdrehen des Oberwagens um die Drehachse erlaubt. Am Unterwagen 20 ist dabei das Fahrwerk 21 mit mehreren bereiften Achsen angeordnet, über welche der Mobilkran auf der Straße und am Hubort verfahrbar ist. Der Unterwagen 20 umfaßt weiterhin Abstützeinheiten 22 zum Abstützen des Mobilkrans am Hubort. Weiterhin ist am Unterwagen einen Motorblock 23 mit einem oder mehreren Verbrennungsmotors zum Antrieb des Fahrwerkes sowie zum Antrieb von Hydraulikpumpen, über welche die hydraulischen Aktoren des erfindungsgemäßen Mobilkrans angetrieben werden, vorgesehen. Am Oberwagen 30 ist die kombinierte Fahrer- und Bedienerkabine 31 angeordnet, über welche der erfindungsgemäße Mobilkran sowohl während der Straßenfahrt gefahren als auch im Kranbetrieb bedient werden kann. Im Ausführungsbeispiel ist die Kabine 31 dabei über einen Kabinenarm 35 an der Drehbühne 34 des Oberwagens angeordnet. An der Drehbühne 34 des Oberwagens ist weiterhin ein Ausleger 32 um eine horizontale Wippachse aufwippbar angelenkt. Das Aufwippen des Auslegers 32 erfolgt dabei über einen Hydraulikzylinder 33, welcher zwischen dem Ausleger 32 und der Drehbühne 34 angeordnet ist. Weiterhin sind am Oberwagen 30 ein Winde zum Bewegen des Hubseils zum Heben der Last angeordnet. Der Hydraulikzylinder 33 und die Winde werden dabei über Hydraulikfluid angetrieben, welches von den Hydraulikpumpen im Unterwagen über eine Drehdurchführung 5 in den Oberwagen und wieder zurück fließt. Die Drehdurchführung ist dabei mittig im Drehkranz 40 angeordnet und erlaubt eine beliebige Drehung des Oberwagens um seine Drehachse, nicht nur im Bereich des Drehkranzes.

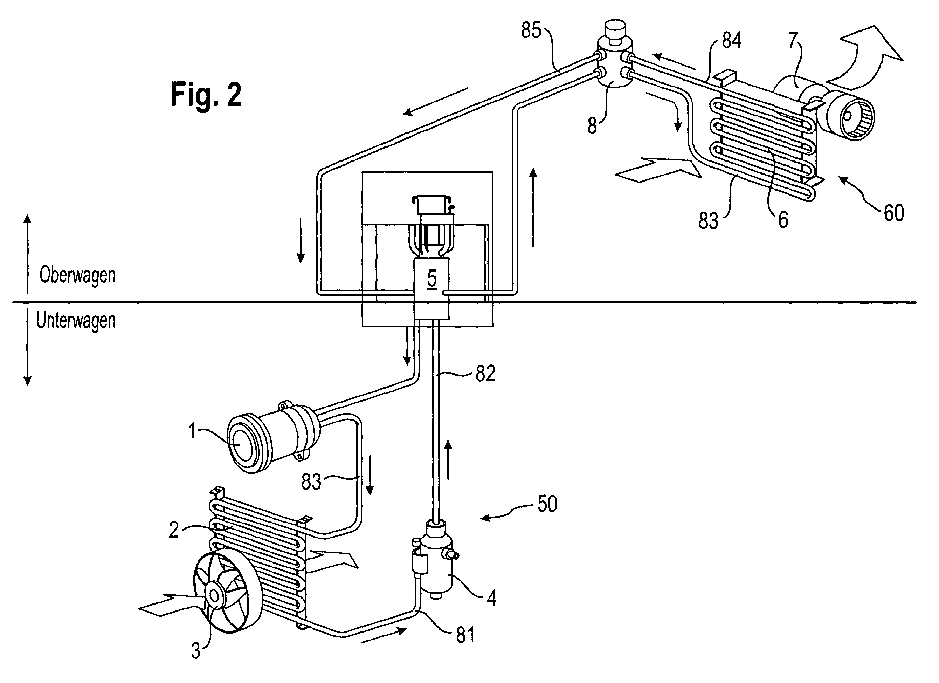

Das erste Ausführungsbeispiel des erfindungsgemäßen Mobilkrans umfasst dabei das in Figur 2 nochmals näher dargestellte erste Ausführungsbeispiel der erfindungsgemäßen Klimaanlage. Diese umfaßt eine Kälteeinheit 50 und eine Klimaeinheit 60, welche über Kältemittelleitungen 80 bis 85 miteinander verbunden sind. Das Kältemittel wird dabei in der Kälteeinheit abgekühlt und in der Klimaeinheit dazu eingesetzt, um die Luft in der Kabine 31 zu klimatisieren. Erfindungsgemäß umfaßt dabei die Drehdurchführung 5 Kältemittelleitungen, so daß Kältemittel vom Unterwagen zum Oberwagen und zurück fließen kann. Hierdurch kann die Kälteeinheit 50 im Unterwagen angeordnet werden, welche während die Klimaeinheit im Oberwagen, insbesondere im Bereich der Kabine 31 angeordnet werden kann.

Die Klimaanlage umfaßt dabei einen Kompressor 1, welcher das Kältemittel komprimiert. Der Kompressor 1 ist am Unterwagen angeordnet und kann hierdurch direkt von einem Verbrennungsmotor, welcher im Unterwagen angeordnet ist, angetrieben werden. Der Verbrennungsmotor dient dabei gleichzeitig als Fahrmotor und/ oder als Antriebsmotor der Hydraulikpumpen des Mobilkrans. Der Kompressor kann dabei direkt am Verbrennungsmotor angebaut werden, so daß sich eine äußerst kompakte Anordnung ergibt. Dabei kann der Kompressor zum Beispiel über einen Riemenantrieb vom Verbrennungsmotor angetrieben werden.

Die Klimaanlage umfaßt weiterhin einen Kondensator 2, über welchen das Kältemittel abgekühlt wird. Der Kondensator ist ebenfalls im Unterwagen angeordnet und ist vorteilhafterweise an einem bereits vorhandenen Kühler angebaut. Dabei kann es sich zum Beispiel um den Kühler des Verbrennungsmotors oder um den Kühler zur Kühlung des Hydraulikfluides handeln. Hierdurch kann zum Beispiel ein bereits vorhandener Kühlkanal eingesetzt werden, um auch den Kondensator der erfindungsgemäßen Klimaanlage zu kühlen. Dabei ist ein Kondensatorlüfter 3 vorgesehen, welcher einen Kühlluftstrom erzeugt, der den Kondensator durchströmt. Gegebenenfalls kann dabei ein bereits vorhandener Lüfter eines ohnehin vorhandenen Kühlers eingesetzt werden. Ebenso ist jedoch auch ein getrennter Kondensatorlüfter denkbar. Weiterhin ist ein Filtertrockner 4 vorgesehen, über welchen das Kältemittel gereinigt und getrocknet werden kann.

Die Klimaeinheit umfaßt ein Expansionsventil 8, über welchen das Kältemittel expandiert wird, so daß es mit niedrigerem Druck in den Verdampfer 6 fließt. Beim Verdampfen nimmt das Kältemittel dabei Wärme aus der zu klimatisierenden Luft auf, welche um den Verdampfer fließt. Das hierdurch erwärmte Kältemittel fließt dann zurück zum Kompressor. Der Verdampfer ist dabei am Oberwagen angeordnet und dient der Klimatisierung der Kabine 31. Ebenso ist das Expansionsventil 8 am Oberwagen angeordnet.

Somit verläuft ein Teil des Kältemittelkreislaufs im Unterwagen und ein Teil des Kältemittelkreislaufs im Oberwagen. Zur Verbindung dieser Teile des Kältemittelkreislaufs sind in der Drehdurchführung 5 Kältemittelleitungen vorgesehen, durch welche Kältemittel vom Unterwagen zum Oberwagen und zurück fließen kann.

Die Klimaanlage arbeitet dabei wie folgt: Der Kompressor 1 komprimiert das gasförmige Kältemittel, so daß es unter Hochdruck gasförmig über die Leitung 80 zum Kondensator 2 fließt, wo das Kältemittel unter Abgabe von Wärme kondensiert. Die Wärme wird dabei über einen Luftstrom abgeführt, welcher von einem Lüfter 3 erzeugt wird. Das flüssige Kältemittel fließt dann unter Hochdruck über die Leitung 81 zum Filtertrockner 4 und über die Leitung 82 weiter zum Expansionsventil 8, von wo aus es flüssig unter Niederdruck über die Leitung 83 zum Verdampfer 6 fließt. Im Verdampfer 6 verdampft das Kältemittel und kühlt so den zu klimatisierenden Luftstrom, welcher durch das Verdampfergebläse 7 erzeugt wird. Das gasförmige Kältemittel fließt nun unter Niederdruck über die Leitung 84 und 85 zurück zum Kompressor 1.

Erfindungsgemäß verlaufen nun die Kältemittelleitungen 82 und 85 durch die Drehdurchführung 5. Dadurch, dass in der Drehdurchführung 5 zwischen Unterwagen und Oberwagen Kältemittelleitungen vorgesehen sind, können die Komponenten des Kältemittelkreislaufs teilweise im Unterwagen und teilweise im Oberwagen angeordnet werden. Dabei ist erfindungsgemäß die Kälteeinheit aus Kompressor 1 und Kondensator 2 im Unterwagen, die Klimaeinheit aus Expansionsventil 8 und Verdampfer 6 im Oberwagen angeordnet. Die Kälteeinheit umfaßt dabei weiterhin den Lüfter 3 und im Ausführungsbeispiel den Filtertrockner 4, während die Klimaeinheit weiterhin das Kabinengebläse 7 umfaßt.

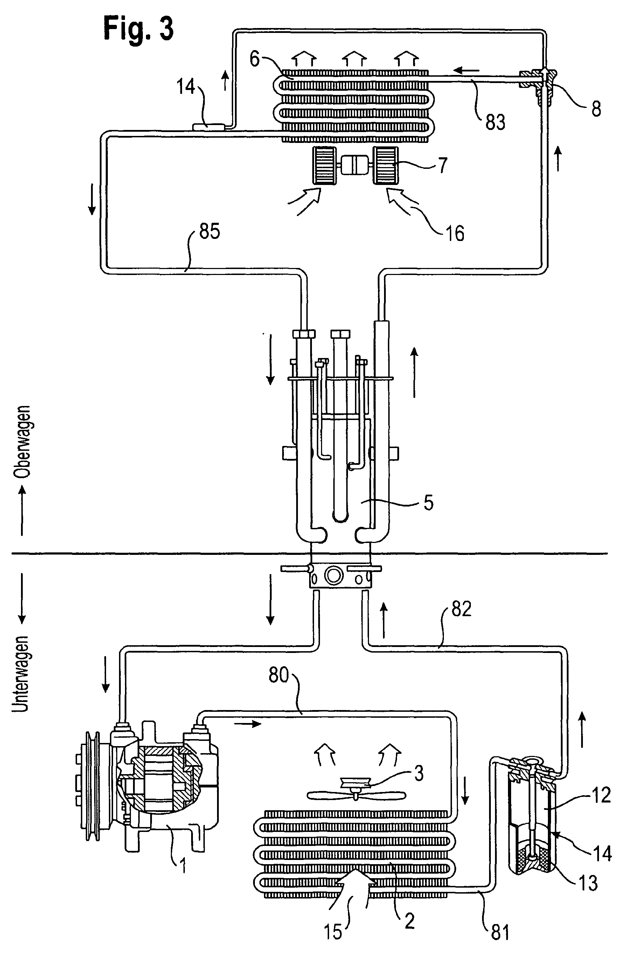

Das in Figur 3 gezeigte zweite Ausführungsbeispiel der erfindungsgemäßen Klimaanlage entspricht dabei im wesentlichen dem bereits in Figuren 1 und 2 gezeigten Aufbau. Der Kompressor 1 saugt dabei das gasförmige Kältemittel aus dem Verdampfer und verdichtet es. Dadurch steigen Druck und Temperatur des Kältemittelgases an. Über die Druckleitung 80 fließt das gasförmige Kältemittel zum Kondensator 2. Im Kondensator 2 gibt das erwärmte Kältemittel Wärme an den Luftstrom 15 ab, welcher von dem Lüfter 3 erzeugt wird. Hierdurch wird das Kältemittel abgekühlt und verflüssigt. Bei dem Lüfter 3 handelt es sich dabei um den Kühlerlüfter der Motorkühlung des Verbrennungsmotors des erfindungsgemäßen Arbeitsgeräts. Alternativ oder zusätzlich kann auch Umgebungsluft bzw. Fahrtwind zur Kühlung des Kondensators 2 eingesetzt werden. Der Filtertrockner 4, durch welchen das flüssige Kältemittel nun unter Hochdruck fließt, umfasst dabei einen Trocknereinsatz 12 sowie einen Filter 13. Der Filtertrockner 4 entfernt damit alle Feuchtigkeitsspuren und filtert Schmutz in der Anlage aus. Er dient zudem als Speicherbehälter für das Kältemittel. Vom Filtertrockner 4 fließt das Kältemittel nun über eine Leitung 82, welche durch die Drehdurchführung zwischen Unterwagen und Oberwagen geführt ist, zum Expansionsventil 8. Das Expansionsventil 8 regelt dabei den Fluss des flüssigen Kältemittels in den Verdampfer, wodurch der Druck und folglich die Temperatur absinken. Dabei wird das Expansionsventil über einen Temperatursensor 14 angesteuert. Das Kältemittel fließt nun mit niedrigem Druck und niedriger Temperatur als Gas durch den Verdampfer. Dort dehnt sich das Kältemittel aus, durchströmt die Verdampferröhren und nimmt Wärme aus der Umgebung auf. Hierdurch wird die den Verdampfer durchströmende Luft abgekühlt. Dabei wird ein Gebläse 7 zum Erzeugen des Luftstroms 16, welcher abgekühlt werden soll, verwendet. Über den Luftstrom 16 kann so die Temperatur im Inneren der Kabine gesenkt werden. Vom Verdampfer 6 fließt das erwärmte gasförmige Kältemittel nun über die Kältemittelleitung 85 wieder zum Kompressor, wobei die Kältemittelleitung 85 durch die Drehdurchführung 5 zwischen dem Unterwagen und dem Oberwagen des Mobilkrans geführt ist.

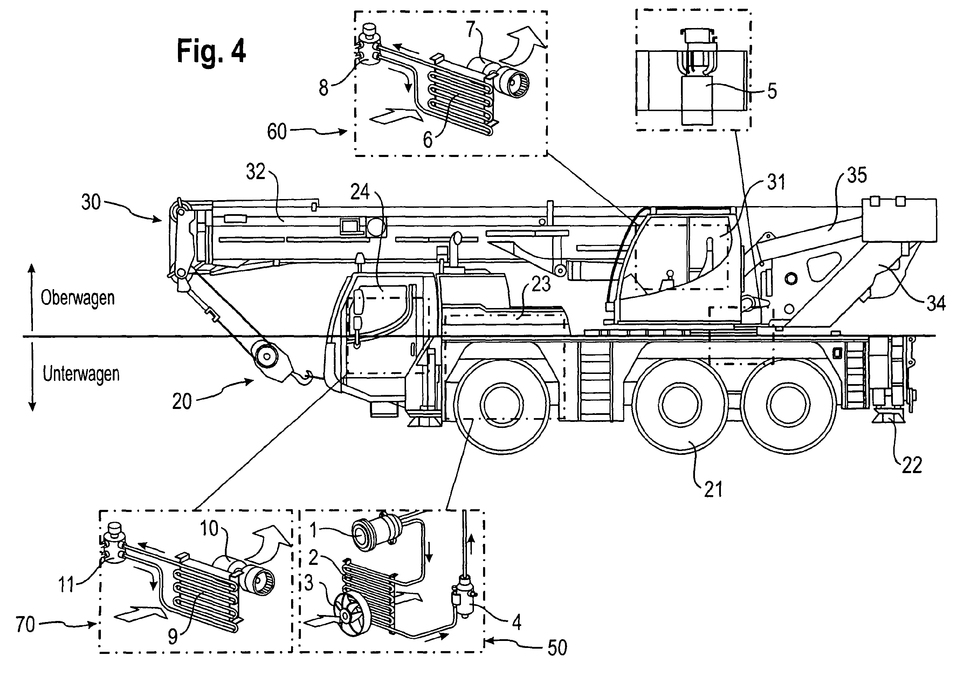

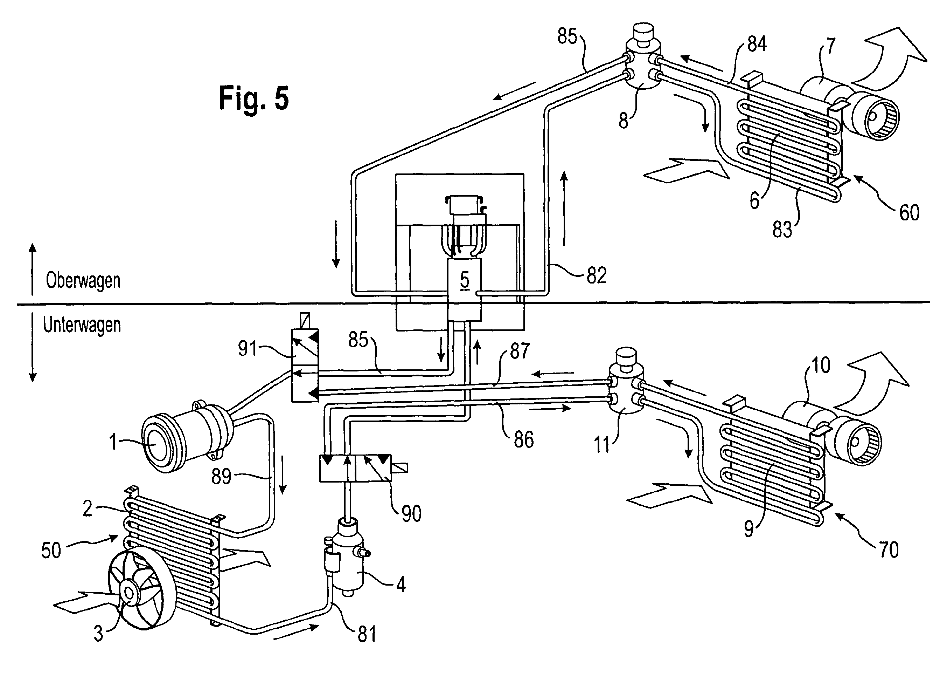

In Figur 4 ist nun ein zweites Ausführungsbeispiel eines erfindungsgemäßen Arbeitsgerätes gezeigt, bei welchem das auch in Figur 5 gezeigte dritte Ausführungsbeispiel einer erfindungsgemäßen Klimaanlage zum Einsatz kommt. Bei dem zweiten Ausführungsbeispiel des erfindungsgemäßen Arbeitsgerätes handelt es sich um einen Mobilkran, bei welchem im Unterschied zum ersten Ausführungsbeispiel am Unterwagen eine Fahrerkabine 24 angeordnet ist, über welche der Mobilkran während einer Straßenfahrt verfahren werden kann. Die am Oberwagen angeordnete Bedienerkabine 31 dient dagegen der Bedienung des Kranes am Hubort. Ansonsten entspricht das zweite Ausführungsbeispiel des erfindungsgemäßen Arbeitsgerätes im Aufbau im wesentlichen dem ersten Ausführungsbeispiel, so dass bezüglich der Beschreibung der übrigen Komponenten auf die obige Darstellung verwiesen wird.

Für die Kühlung der Fahrerkabine 24 und der Bedienerkabine 31 sind nun erfindungsgemäß getrennte Klimaeinheiten 70 bzw. 60 vorgesehen, welche von derselben Kälteeinheit 50 mit Kältemittel versorgt werden. Die Klimaanlage weist dabei zum einen einen Kühlkreislauf mit einer Kälteeinheit 50 und einer Klimaeinheit 60 auf, wie er bereits bezüglich des ersten Ausführungsbeispiels des erfindungsgemäßen Arbeitsgerätes und des ersten Ausführungsbeispiels einer erfindungsgemäßen Klimaanlage dargestellt wurde. Die Kälteeinheit 50 ist dabei im Unterwagen angeordnet, während die Klimaeinheit 60 im Oberwagen angeordnet ist und zur Klimatisierung der Bedienerkabine 31 dient. Wiederum verlaufen dabei Kältemittelleitungen 82 und 85 durch die Drehdurchführung 5 zwischen Unterwagen und Oberwagen.

Zusätzlich zu dem in Figuren 1 und 2 gezeigten Aufbau des ersten Ausführungsbeispiels einer Klimaanlage ist bei dem dritten Ausführungsbeispiel weiterhin die Klimaeinheit 70 vorgesehen, welche der Klimatisierung der Fahrerkabine 24 dient und dementsprechend am Unterwagen angeordnet ist. Dabei sind Kältemittelleitungen 86 und 87 vorgesehen, welche die Kälteeinheit 50 mit der Klimaeinheit 70 verbinden, wobei diese Kältemittelleitungen 86 und 87 im Unterwagen verlaufen. Die Klimaeinheit 70 entspricht dabei in ihrem Aufbau im wesentlichen dem Aufbau der Klimaeinheit 60, so dass bezüglich deren Funktion auf die obige Beschreibung verwiesen wird.

Zur Steuerung der Kältemittelversorgung der Klimaeinheiten 60 und 70 für die Bedienerkabine und die Fahrerkabine sind Ventile 90 und 91 vorgesehen. Über diese Ventile kann die Kälteeinheit 50 mit der Klimaeinheit 60 und/oder mit der Klimaeinheit 70 verbunden werden. Alternativ zur dargestellten Ausführung mit zwei getrennten Ventilen ist selbstverständlich auch eine Ausführung mit nur einem Ventilblock möglich. Durch die Ventile können die Klimaeinheit 60 und die Klimaeinheit 70 abwechselnd oder gegebenenfalls gleichzeitig mit Kältemittel versorgt werden. Die Klimakreisläufe arbeiten dabei wiederum jeweils nach den bereits oben dargestellten Prinzipien.

Durch die in Figuren 4 und 5 dargestellte Anordnung ist es somit möglich, bei einem Mobilkran mit getrennten Fahrer- und Bedienkabinen wahlweise jeweils über getrennte Klimaeinheiten zu klimatisieren, wobei jedoch beide Klimaeinheiten von derselben Kälteeinheit mit Kältemittel versorgt werden. Dabei ist es wiederum möglich, die Kälteeinheit im Unterwagen anzuordnen, während die im Oberwagen angeordnete Klimaeinheit 60 zur Klimatisierung der Bedienerkabine 31 über die Kältemittelleitungen der Drehdurchführungen 5 mit Kältemittel versorgt wird.

Die erfindungsgemäße Drehdurchführung weist dabei in allen Ausführungsbeispielen Kältemittelleitungen auf, über welche Kältemittel vom Unterwagen zum Oberwagen und zurück fließen kann. Die erfindungsgemäße Drehdurchführung weist hierfür entsprechend ausgelegte Dichtungen für die Kältemittelleitungen auf. Die Drehdurchführung erlaubt damit eine beliebige Drehung des Oberwagens um seine Drehachse, während sie gleichzeitig die fluidische Verbindung der Kältemittelleitungen zwischen Unter- und Oberwagen garantiert. Weiterhin weist die erfindungsgemäße Drehdurchführung Hydraulikleitungen zur hydraulischen Verbindung von Ober- und Unterwagen auf.

Die erfindungsgemäße Klimaanlage bzw. die erfindungsgemäße Drehdurchführung können dabei neben der gezeigten Verwendung in einem Mobilkran auch bei anderen verfahrbaren Arbeitsgeräten eingesetzt werden, wenn die Kälteeinheit und die Klimaeinheit getrennt voneinander im Unterwagen bzw. im Oberwagen angeordnet werden sollen. Eine solche Anordnung ist insbesondere dann von Vorteil, wenn der Oberwagen selbst keinen Verbrennungsmotor aufweist, so dass ohne die erfindungsgemäße Anordnung der Kompressor der Klimaanlage indirekt über einen Hydraulikkreislauf oder elektrisch angetrieben werden müsste. Durch die vorliegende Erfindung kann der Kompressor dagegen direkt von einem Verbrennungsmotor, welcher z.B. im Unterwagen angeordnet ist, angetrieben werden. Die Klimaeinheit kann dagegen im Bereich der zu klimatisierenden Fahrerkabine z.B. im Oberwagen angeordnet werden.

## Patentansprüche

1. Verfahrbares Arbeitsgerät, insbesondere Mobilkran, mit einem Unterwagen und einem auf dem Unterwagen drehbar angeordneten Oberwagen, und mit einer Klimaanlage, welche einen Kältemittelkreislauf mit einer Kälteeinheit und einer Klimaeinheit aufweist,
**dadurch gekennzeichnet,**
**dass** ein Teil des Kältemittelkreislaufs im Unterwagen und ein Teil des Kältemittelkreislaufs im Oberwagen verläuft, wobei diese Teile über Kältemittelleitungen in einer Drehdurchführung zwischen dem Unterwagen und dem Oberwagen verbunden sind.

2. Verfahrbares Arbeitsgerät nach Anspruch 1, wobei die Kälteeinheit im Unterwagen und die Klimaeinheit im Oberwagen angeordnet ist.

3. Verfahrbares Arbeitsgerät nach Anspruch 1 oder 2, wobei der Kompressor der Kälteeinheit direkt von einem Verbrennungsmotor angetrieben wird, insbesondere vom Fahrmotor des verfahrbaren Arbeitsgerätes und/oder von einem Antriebsmotor der Hydraulikpumpen des verfahrbaren Arbeitsgerätes.

4. Verfahrbares Arbeitsgerät nach Anspruch 3, wobei der Kompressor der Kälteeinheit am Verbrennungsmotor angebaut ist.

5. Verfahrbares Arbeitsgerät nach einem der vorangegangenen Ansprüche, wobei der Oberwagen keinen Verbrennungsmotor aufweist.

6. Verfahrbares Arbeitsgerät nach einem der vorangegangenen Ansprüche, wobei der Kondensator der Kälteeinheit an einem Kühler angebaut ist, welcher zur Kühlung eines Verbrennungsmotors und/oder zur Kühlung von Hydraulikfluid eingesetzt wird.

7. Verfahrbares Arbeitsgerät nach einem der vorangegangenen Ansprüche, wobei die Drehdurchführung weiterhin Hydraulikleitungen und Leitungen zur Durchführung von anderen Medien, wie z.B. Druckluft, umfaßt.

8. Verfahrbares Arbeitsgerät nach einem der vorangegangenen Ansprüche, mit einer kombinierten Fahrer- und Bedienerkabine, welche am Oberwagen angeordnet ist und über die Klimaeinheit klimatisiert wird.

9. Verfahrbares Arbeitsgerät nach einem der Ansprüche 1 bis 7, mit einer Fahrerkabine am Unterwagen und einer Bendienerkabine am Oberwagen, wobei zur Kühlung der Fahrerkabine und der Bendienerkabine getrennte Klimaeinheiten vorgesehen sind, welche von der selben Kälteeinheit mit Kältemittel versorgt werden.

10. Verfahrbares Arbeitsgerät nach Anspruch 9, mit mindestens einem Ventil zur Steuerung der Kältemittel-Versorgung der Klimaeinheiten für die Fahrerkabine und die Bendienerkabine.

11. Klimaanlage für ein verfahrbares Arbeitsgerät nach einem der vorangegangen Ansprüche.

12. Drehdurchführung für ein verfahrbares Arbeitsgerät nach einem der vorangegangen Ansprüche.

13. Drehdurchführung nach Anspruch 12, **dadurch gekennzeichnet, daß** die Kanäle für den Kältekreislauf möglichst kurz gehalten sind.

14. Drehdurchführung für ein verfahrbares Arbeitsgerät nach Anspruch 12, **dadurch gekennzeichnet, daß** diese neben einer normalen Durchführung für ein Hydraulikmedium oder ein Pneumatikmedium eine gesonderte Durchführung für ein Kältemittel umfaßt.

15. Drehdurchführung nach Anspruch 12, **dadurch gekennzeichnet, daß** die Drehdurchführung zumindest teilweise aus wärmeisolierendem Material hergestellt ist.
